# EUROPEAN PATENT SPECIFICATION

(11) **EP 3 076 170 B1**
(45) Date of publication and mention of the grant of the patent: **06.09.2023**
(21) Application number: 14865665.5
(22) Date of filing: 27.11.2014
(51) Int. Cl.: B01J 20/289, B01J 20/32, G01N 30/02, G01N 30/88, B01D 15/38

(54) **SOLID-PHASE CARRIER AND PRODUCTION METHOD FOR FILLER FOR AFFINITY CHROMATOGRAPHY**
FESTPHASENTRÄGER UND HERSTELLUNGSVERFAHREN FÜR FÜLLMITTEL FÜR AFFINITÄTSCHROMATOGRAFIE
SUPPORT DE PHASE SOLIDE ET PROCÉDÉ DE PRODUCTION POUR CHARGE POUR CHROMATOGRAPHIE D'AFFINITÉ

(30) Priority: 27.11.2013 JP 2013244848; 27.06.2014 JP 2014132610
(43) Date of publication of application: 05.10.2016
(73) Proprietor: JSR Corporation, Minato-ku Tokyo 105-8640 (JP); JSR Life Sciences Corporation, Tokyo 105-8640 (JP)
(72) Inventor: MOMIYAMA, Masaki, Tokyo 105-8640 (JP); TSUDA, Sachiko, Tokyo 105-8640 (JP); OKANO, Yusuke, Tokyo 105-8640 (JP); SHIOTANI, Tomonori, Tokyo 105-8640 (JP); KAWADA, Yuko, Tokyo 105-8640 (JP); TSUDA, Ryou, Tokyo 105-8640 (JP); KAWAI, Hiroshi, Tokyo 105-8640 (JP)
(74) Representative: TBK
(86) International application number: PCT/JP2014/081302
(87) International publication number: WO 2015/080174

(56) References cited:
- EP-A1- 2 562 178
- EP-A1- 3 162 809
- WO-A1-03/024588
- WO-A1-2006/123576
- WO-A1-2011/125673
- JP-A- 2005 503 571
- JP-A- 2005 517 517

## Description

### Technical Field

The present invention relates to a solid-phase carrier, and a method for producing a a filler for affinity chromatography.

### Background Art

Affinity chromatography plays a key role in the research, development, and production of proteins including monoclonal antibodies. A carrier for affinity refining to be used for affinity chromatography generally contains a solid-phase carrier having a ligand that selectively binds to a target substance, and a reactive group for binding this ligand. Since the ligand on the solid-phase carrier used in affinity chromatography exhibits high selectivity to the target substance, the affinity chromatography enables economic refining with an excellent yield and at a high speed, as compared to other chromatographic techniques such as ion chromatography, gel filtration chromatography, and reverse phase liquid chromatography.

Generally, as the performance required in affinity chromatography for protein refining, performance that is unlikely to have non-specific adsorption of impurities other than a target protein, or performance that exhibits dynamic binding capacity with respect to a target protein corresponding to a ligand when the ligand is immobilized, or the like is exemplified.

Under such circumstances, it is proposed to use agarose particles (Patent Literatures 1 and 2), porous particles consisting of a copolymer of styrene-divinylbenzene (Patent Literatures 3 and 4) , and porous particles consisting of a polymer of a methacrylate-based vinyl monomer (Patent Literatures 5 and 6) , as a solid-phase carrier of a carrier for affinity refining.

EP 2 562 178 A1 describes a filler for affinity chromatography which includes a porous particle consisting of a polymer of vinyl monomer including a cross-linkable vinyl monomer that contains hydroxyl group but does not contain epoxy group and an epoxy group-containing non-cross-linkable vinyl monomer, or a cross-linkable vinyl monomer that contains hydroxyl group and epoxy group, ligands bound to the porous particle, and ring-opened epoxy groups.

WO 03/024588 A1 describes a method of generating a separation medium comprising mixed mode cation-exchanger ligands coupled to a base matrix, which method comprises to provide a scaffold comprising a functional group and exhibiting a cyclic core structure; derivatise the scaffold with a reagent comprising a reactive group coupled to a residue R by reacting the functional group of the scaffold with said reactive group; open the cyclic structure of the resulting derivative; and react the product with a base matrix comprising a re-active group. The scaffold presents at least two functionalities; one sulphur-comprising group for coupling to the base matrix and one group that can be transformed into an ionic group.

### Citation List

### Patent Literature

Patent Literature 1: JP 2008-523140 W
Patent Literature 2: JP 2009-522580 W
Patent Literature 3: JP 08-278299 A
Patent Literature 4: JP 10-501173 W
Patent Literature 5: WO 2011/125674 A
Patent Literature 6: JP 2012-141212 A

### Summary of Invention

### Technical Problem

Under such circumstances as described above, it is an object of the present invention to provide a solid-phase carrier that exhibits high dynamic
binding capacity when a ligand is immobilized, have excellent antifouling properties, and are unlikely to have non-specific adsorption of impurities.

### Solution to Problem

In this regard, the present inventors carried out an extensive investigation and, as a result, they found that a solid-phase carrier, which is defined in claim 1, has excellent antifouling properties and exhibits high dynamic binding capacity when a ligand is immobilized. Thus, they accomplished the present invention.

That is, the present invention is to provide <1> a solid-phase carrier as defined in claim 1 (hereinafter, this solid-phase carrier is also referred to as the solid-phase carrier A).

Further, the present invention is to provide <2> a method for producing a filler for affinity chromatography, the method including a step of fixing a ligand to the solid-phase carrier described in the above <1> (hereinafter, this production method is also referred to as the production method C) .

### Advantageous Effects of Invention

The solid-phase carrier A of the present invention has excellent antifouling properties and is unlikely to have non-specific adsorption of impurities such as a host cell protein (HCP). Moreover, the solid-phase carrier A exhibits high dynamic binding capacity when a ligand is immobilized.

Therefore, the filler for affinity chromatography has a large dynamic binding capacity of a target substance corresponding to the ligand, and excellent antifouling properties.

Further, according to the production method C of the filler for affinity chromatography of the present invention, a solid-phase carrier and a filler for affinity chromatography having performances as described above can be simply produced.

### Brief Description of Drawings

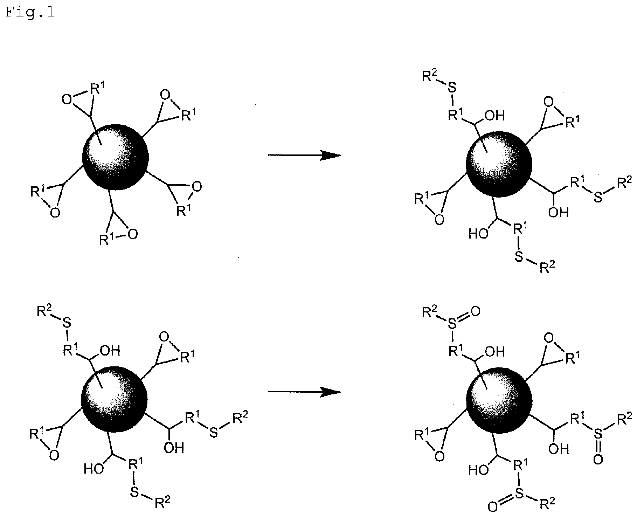

Fig. 1 is a diagram illustrating an example of a method for producing a solid-phase carrier of the present invention.

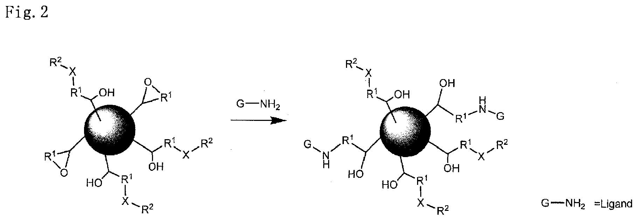

Fig. 2 is a diagram illustrating an example of a method for producing a filler for affinity chromatography of the present invention.

### Description of Embodiments

### <Solid-Phase Carrier A>

The solid-phase carrier A of the present invention is defined in claim 1.

Further, in the solid-phase carrier A of the present invention, the ligand may not be fixed to the functional group capable of fixing a ligand.

The functional group capable of fixing the ligand is a cyclic ether group.

A cyclic ether group having 3 to 7 atoms that form a ring is preferable, a group represented by the following Formula (1-1), (1-2) or (1-3) is more preferable, and a group represented by the following Formula (1-1) is particularly preferable.

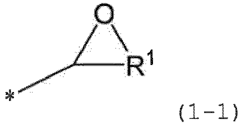

[In Formula (1-1),
R¹ represents a divalent hydrocarbon group having 1 to 6 carbon atoms, and
* represents a bond.]

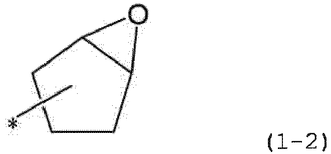

[In Formula (1-2), * has the same meaning as defined above . ]

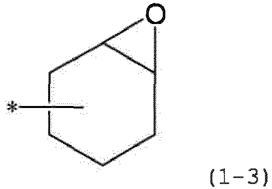

[In Formula (1-3), * has the same meaning as defined above. ]

In Formula (1-1), R¹ represents a divalent hydrocarbon group having 1 to 6 carbon atoms. The number of carbon atoms of such a divalent hydrocarbon group is preferably 1 to 4, more preferably 1 or 2, and particularly preferably 1. Further, the divalent hydrocarbon group may be a linear chain or a branched chain.

Further, the divalent hydrocarbon group is preferably a divalent aliphatic hydrocarbon group and more preferably an alkanediyl group. Preferred specific examples thereof include a methane-1,1-diyl group, an ethane-1,1-diyl group, and an ethane-1,2-diyl group.

Further, the solid-phase carrier A of the present invention has a group represented by the following
Formula (2-1), (2-2) or (2-3), and a group represented by the following Formula (2-1) is particularly preferable.

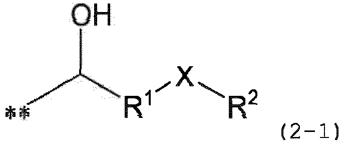

[In Formula (2-1),
R² is defined in claim 1,
X represents a sulfinyl group, a sulfide group, an oxy group or an imino group,
** represents a bond, and
R¹ is defined in claim 1].

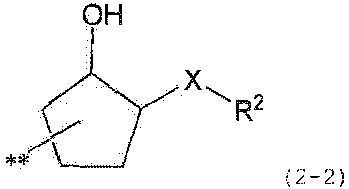

[In Formula (2-2), R², X, and ** have the same meaning as defined above.]

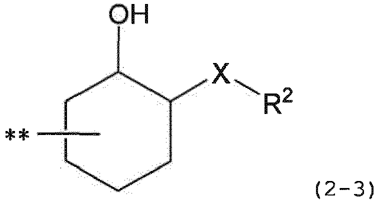

[In Formula (2-3), R², X, and ** have the same meaning as defined above.]

In Formulae (2-1) to (2-3), X represents a sulfinyl group, a sulfide group, an oxy group or an imino group, and from the viewpoint of antifouling properties, X is preferably a sulfinyl group, a sulfide group or an oxy group, and particularly preferably a sulfinyl group.

Further, in Formulae (2-1) to (2-3), R² is defined in claim 1. The number of carbon atoms of such a monovalent organic group is preferably 1 to 8, more preferably 1 to 6, and even more preferably 2 to 4, from the viewpoint of dynamic binding capacity when a ligand is immobilized and antifouling properties.

R² is a monovalent organic group represented by the following Formula (3).

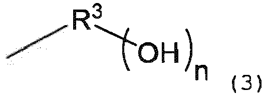

[In Formula (3),
R represents an alkanediyl or an alkanetriyl group having 1 to 10 carbon atoms, and
n represents 1 or 2.]

The number of carbon atoms of the divalent or trivalent organic group represented by R³ in Formula (3) is preferably 1 to 8, more preferably 1 to 6, and even more preferably 2 to 4, from the viewpoint of dynamic binding capacity when a ligand is immobilized and antifouling properties.

The number of carbon atoms of the alkanediyl group is preferably 1 to 8, more preferably 1 to 6, and even more preferably 2 to 4, from the viewpoint of dynamic binding capacity when a ligand is immobilized and antifouling properties.

Specific examples of the alkanediyl group include a methane-1,1-diyl group, an ethane-1,1-diyl group, an ethane-1,2-diyl group, a propane-1,1-diyl group, a propane-1,2-diyl group, a propane-1,3-diyl group, and a propane-2,2-diyl group.

The number of carbon atoms of the alkanetriyl group is preferably 1 to 8, more preferably 1 to 6, and even more preferably 2 to 4, from the viewpoint of dynamic binding capacity when a ligand is immobilized and antifouling properties.

Specific examples of the alkanetriyl group include a methane-1,1,1-triyl group, an ethane-1,1,2-triyl group, a propane-1,2,3-triyl group, and a propane-1,2,2-triyl group.

Further, from the viewpoint of dynamic binding capacity when a ligand is immobilized and antifouling properties, n in Formula (3) is preferably 2.

Further, from the viewpoint of dynamic binding capacity when a ligand is immobilized and the amount of the ligand which can be immobilized, the content of the functional group capable of fixing a ligand is preferably 0.05 to 6.5 mmol, more preferably 0.2 to 3.5 mmol, and particularly preferably 0.5 to 2 mmol per gram of the solid-phase carrier A.

The content of the functional group capable of fixing a ligand maybe set in accordance with a quantitative determination method of each functional group, and for example, in the case of an epoxy group, the content thereof can be measured by, for example, ring-opening the epoxy group with an acid, neutralizing the ring-opened epoxy group with alkali, and then subjecting the neutralization product to a back-titration with an acid.

Further, from the viewpoint of dynamic binding capacity when a ligand is immobilized and antifouling properties, the content of a sulfinyl group, a sulfide group, an oxy group or an imino group is preferably 0.1 to 6.5 mmol, more preferably 0.5 to 4.5 mmol, and particularly preferably 1 to 3 mmol per gram of the solid-phase carrier A.

Further, when the solid-phase carrier A has a sulfinyl group, from the viewpoint of dynamic binding capacity when a ligand is immobilized and antifouling properties, the content of the sulfinyl group is preferably 0.1 to 6.5 mmol, more preferably 0.5 to 4.5 mmol, and particularly preferably 1 to 3 mmol per gram of the solid-phase carrier A.

Further, when the solid-phase carrier A has a sulfide group, from the viewpoint of dynamic binding capacity when a ligand is immobilized and antifouling properties, the content of the sulfide group is preferably 0.1 to 6.5 mmol, more preferably 0.5 to 4.5 mmol, and particularly preferably 1 to 3 mmol per gram of the solid-phase carrier A.

Further, when the solid-phase carrier A has a sulfinyl group and a sulfide group, a content ratio between the sulfinyl group and the sulfide group is preferably 100 : 0 to 30 : 70, more preferably 100 : 0 to 50 : 50, and particularly preferably 100 : 0 to 70 : 30 in terms of molar ratio.

Further, the solid-phase carrier A of the present invention preferably has the functional group capable of fixing a ligand on the surface thereof. Further, the solid-phase carrier A preferably has the group having a sulfinyl group, a sulfide group, an oxy group or an imino group on the surface thereof.

Further, as the solid-phase carrier A of the present invention, a solid-phase carrier, which contains the functional group capable of fixing the ligand and a resin having the group having a sulfinyl group, a sulfide group, an oxy group or an imino group, is preferable and a solid-phase carrier containing the resin on the surface thereof is more preferable.

Further, regarding a form of the solid-phase carrier A, any form such as a monolith, a film, a hollow fiber, a particle, a cassette, or a chip may be employed, and a particle form is preferable. Further, the solid-phase carrier A may be porous or non-porous, and from the viewpoint of improving a surface area, it is preferable to form the solid-phase carrier into a porous body such as porous particles. Further, as porous particles, porous polymer particles are preferable. Further, the resin is not particularly limited as long as it has the functional group capable of fixing the ligand, and the group having a sulfinyl group, a sulfide group, an oxy group or an imino group,
and the resin may be a natural polymer comprising polysaccharides such as agarose, dextran, and cellulose, or a synthetic polymer. As the resin, a resin having a structural unit derived from an ethylenically unsaturated monomer is preferable. Examples thereof include a resin having a structural unit derived from one or two or more monomers selected from the group consisting of a styrene-based monomer, a vinyl ketone-based monomer, a (meth)acrylonitrile-based monomer, a (meth)acrylate-based monomer, and a (meth)acrylamide-based monomer.

Further, when the solid-phase carrier A of the present invention is formed of a polymer, the polymer may have a terminal structure having at least one selected from the group consisting of a hydroxyl group, a thiol group, a carbonyl group, an amino group, a thio group, a disulfide group, a sulfinyl group, a sulfonyl group, a carboxy group, a sulfate group, and a phosphate group, in the terminal of the chain through a thio group, a sulfinyl group or a sulfonyl group.

Further, when the solid-phase carrier A of the present invention is particles, from theviewpoint of pressure resistance performance, the average particle diameter (volume average particle diameter) thereof is preferably 20 to 150 µm and more preferably 40 to 100 µm. Further, the variation coefficient of the average particle diameter is preferably 40% or less and more preferably 30% or less.

Further, from the viewpoint of dynamic binding capacity when a ligand is immobilized, the specific surface area of the solid-phase carrier A of the present invention is preferably 70 m²/g or more and more preferably 90 m²/g or more with respect to the specific surface area in a pore size of 10 nm to 5000 nm.

Further, from the viewpoint of dynamic binding capacity when a ligand is immobilized, the specific surface area of the solid-phase carrier A of the present invention is preferably 70 m²/g or more and more preferably 90 m²/g or more with respect to the specific surface area in a pore size of 10 nm to 5000 nm.

The average particle diameter and the specific surface area may be measured by, for example, a laser diffraction/scattering particle size analysis measurement apparatus or a mercury porosimeter.

Next, the method for producing the solid-phase carrier A of the present invention will be described in detail.

The method for producing the solid-phase carrier A of the present invention is not particularly limited as long as the solid-phase carrier A is produced by appropriately combining normal methods, and for example, the solid-phase carrier A can be obtained by the following methods [PR-1] and [PR-2]. According to the methods [PR-1] and [PR-2], it is possible to easily obtain the solid-phase carrier A having excellent antifouling properties and exhibiting high dynamic binding capacity when a ligand is immobilized.

[PR-1] A method of bringing a solid-phase carrier having a functional group capable of fixing a ligand (hereinafter, also referred to as the raw material carrier (I)) into contact with a compound represented by Formula (4). Specifically, a method, which includes <Step 1-1> obtaining the raw material carrier (I) in accordance with a normal method and <Step 1-2> bringing the raw material carrier (I) into contact with the compound represented by Formula (4), is exemplified.

According to such a method [PR-1], it is possible to obtain a solid-phase carrier having a functional group capable of fixing a ligand and a group represented by Formula (5-1), (5-2) or (5-3) .

[PR-2] A method of bringing the raw material carrier (I) into contact with the compound represented by Formula (4) in which Y is a sulfide group to obtain a solid-phase carrier having a functional group capable of fixing a ligand and a group represented by Formula (5-1), (5-2) or (5-3) in which Y is a sulfide group (hereinafter, also referred to as the sulfide group-containing solid-phase carrier (II)) and then bringing the sulfide group-containing solid-phase carrier (II) into contact with an oxidant.

Specifically, a method which includes <Step 2-1> obtaining the raw material carrier (I) in accordance with a normal method, <Step 2-2> bringing the raw material carrier (I) into contact with the compound represented by Formula (4) in which Y is a sulfide group to obtain the sulfide group-containing solid-phase carrier (II), and <Step 2-3> bringing the sulfide group-containing solid-phase carrier (II) into contact with an oxidant.

According to such a method [PR-2], it is possible to obtain a solid-phase carrier having a functional group capable of fixing a ligand and a group represented by Formula (6-1), (6-2) or (6-3) .

R²-Y-H (4)

[In Formula (4),
Y represents a sulfide group, an oxy group or an imino group, and
R² has the same meaning as defined above and represents a monovalent organic group having 1 to 10 carbon atoms.]

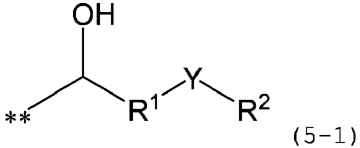

[In Formula (5-1),
R¹ has the same meaning as defined above and represents a divalent hydrocarbon group having 1 to 6 carbon atoms,
R² has the same meaning as defined above and represents a monovalent organic group having 1 to 10 carbon atoms,
Y has the same meaning as defined above and represents a sulfide group, an oxy group or an imino group, and
** represents a bond.]

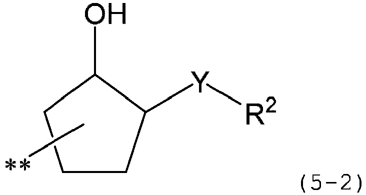

[In Formula (5-2), R², Y, and ** have the same meaning as defined above.]

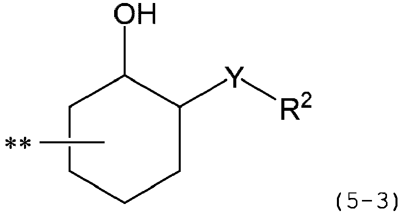

[In Formula (5-3), R², Y, and ** have the same meaning as defined above.]

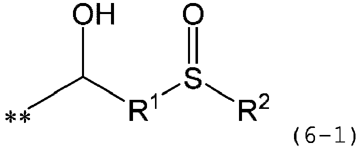

[In Formula (6-1), R¹, R², and ** have the same meaning as defined above.]

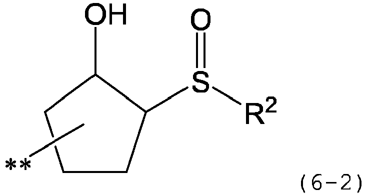

[In Formula (6-2) , R² and ** have the same meaning as defined above.]

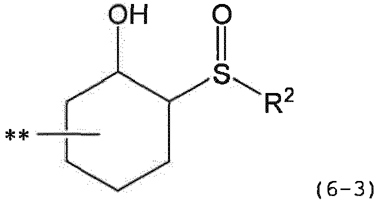

[In Formula (6-3) , R² and ** have the same meaning as defined above.]

Hereinafter, each step described above will be described in detail.

### <Steps 1-1 and 2-1>

Steps 1-1 and 2-1 are steps of obtaining the raw material carrier (I) . For example, a monomer having the functional group capable of fixing a ligand may be (co) polymerized. Examples of the (co)polymerization method include seed polymerization and suspension polymerization, and suspension polymerization is preferable.

Here, the functional group capable of fixing a ligand contained in the raw material carrier (I) is a cyclic ether group.

A group represented by the following Formula (1-1), (1-2) or (1-3) is preferable, and a group represented by the following Formula (1-1) is more preferable.

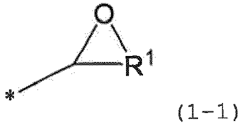

[In Formula (1-1),
R¹ represents a divalent hydrocarbon group having 1 to 6 carbon atoms, and
* represents a bond.]

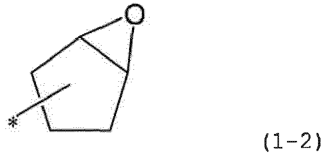

[In Formula (1-2), * has the same meaning as defined above. ]

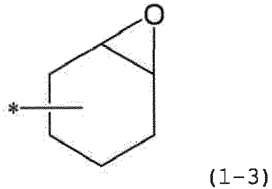

[In Formula (1-3), * has the same meaning as defined above. ]

In Formula (1-1), R¹ represents a divalent hydrocarbon group having 1 to 6 carbon atoms. The number of carbon atoms of such a divalent hydrocarbon group is preferably 1 to 4, more preferably 1 or 2, and particularly preferably 1. Further, the divalent hydrocarbon group may be a linear chain or a branched chain.

Further, the divalent hydrocarbon group is preferably a divalent aliphatic hydrocarbon group and more preferably an alkanediyl group. Preferred specific examples thereof include a methane-1,1-diyl group, an ethane-1,1-diyl group, and an ethane-1,2-diyl group.

A monomer having a group represented by Formula (1-1) is preferable as a monomer having a functional group capable of fixing a ligand and examples thereof include an epoxy group-containing unsaturated monomer. As such an epoxy group-containing unsaturated monomer, a (meth)acrylate-based monomer or a styrene-based monomer is preferable, a (meth)acrylate-based monomer is more preferable, and a (meth)acrylate-based monomer represented by the following Formula (7) is particularly preferable.

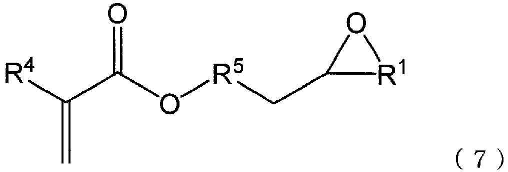

[In Formula (7),
R⁴ represents a hydrogen atom or a methyl group,
R⁵ represents a single bond, a divalent hydrocarbon group having 1 to 10 carbon atoms or - (R⁶O)ₘ- (R⁶ represents an alkanediyl group having 2 to 4 carbon atoms and m represents an integer of 1 to 50), and
R¹ has the same meaning as defined above and represents a divalent hydrocarbon group having 1 to 6 carbon atoms.]

The number of carbon atoms of the divalent hydrocarbon group represented by R⁵ is preferably 1 to 8, more preferably 1 to 6, and even more preferably 1 to 4 . The divalent hydrocarbon group may be a linear chain or a branched chain.

Further, the divalent hydrocarbon group is preferably a divalent aliphatic hydrocarbon group and more preferably an alkanediyl group. The number of carbon atoms of such an alkanediyl group is preferably 1 to 8, more preferably 1 to 6, and even more preferably 1 to 4.

Specific examples of the alkanediyl group include a methane-1,1-diyl group, an ethane-1,1-diyl group, an ethane-1,2-diyl group, a propane-1,1-diyl group, a propane-1,2-diyl group, a propane-1,3-diyl group, and a propane-2,2-diyl group.

The number of carbon atoms of the alkanediyl group represented by R⁶ is preferably 2 or 3 and more preferably 2. Further, such an alkanediyl group may be a linear chain or a branched chain. Specific examples thereof include an ethane-1,1-diyl group, an ethane-1,2-diyl group, a propane-1,1-diyl group, a propane-1,2-diyl group, a propane-1,3-diyl group, a propane-2,2-diyl group, a butane-1,2-diyl group, a butane-1,3-diyl group, and a butane-1,4-diyl group.

Further, m represents an integer of 1 to 50, and is preferably an integer of 1 to 30, more preferably an integer of 1 to 25, even more preferably an integer of 1 to 20, even more preferably an integer of 1 to 15, even more preferably an integer of 1 to 10, even more preferably an integer of 1 to 5, and particularly preferably an integer of 1 to 3.

Further, among R⁵s as described above, a single bond is preferable.

Further, as the monomer having a functional group capable of fixing the ligand, glycidyl (meth)acrylate, 4-hydroxybutyl (meth)acrylate glycidyl ether, α-(meth)acryl-ω-glycidyl polyethylene glycol, (4-vinylbenzyl) glycidyl ether, (7-oxabicyclo[4.1.0]heptan-3-yl)methyl (meta)acrylate, allyl glycidyl ether, 3,4-epoxy-1-butene, or 3,4-epoxy-3-methyl-1-butene is exemplified, and these can be used alone or in combination of two or more thereof.

Further, from the viewpoint of dynamic binding capacity when a ligand is immobilized and an amount of a ligand which can be immobilized, the total used amount of the monomer having a functional group capable of fixing the ligand is preferably 1 to 90 parts by mass, more preferably 20 to 80 parts by mass, and particularly preferably 30 to 70 parts by mass, with respect to 100 parts by mass of the total amount of the monomer.

Further, in Steps 1-1 and 2-1, other monomers may be used with the monomer having a functional group capable of fixing a ligand. As the other monomers, any of a non-crosslinkable monomer and a crosslinkable monomer can be used and these may be used in combination.

Examples of the non-crosslinkable monomer include a hydroxyl group-containing non-crosslinkable unsaturated monomer and a non-crosslinkable unsaturated monomer not containing a hydroxyl group. Examples of the crosslinkable monomer include a hydroxyl group-containing crosslinkable unsaturated monomer and a crosslinkable unsaturated monomer not containing a hydroxyl group.

As the hydroxyl group-containing non-crosslinkable unsaturated monomer, a (meth)acrylate-based monomer and a (meth)acrylamide-based monomer are preferable, and a (meth)acrylate-based monomer is more preferable. Of them, a (meth)acrylate-based monomer represented by the following Formula (8) is particularly preferable. The number of hydroxyl groups contained in the hydroxyl group-containing non-crosslinkable unsaturated monomer is preferably 1 to 5 and more preferably 1 to 3.

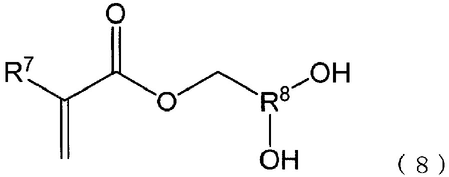

[In Formula (8),
R⁷ represents a hydrogen atom or a methyl group, and
R⁸ represents a trivalent hydrocarbon group having 1 to 6 carbon atoms.]

The trivalent hydrocarbon group represented by R⁸ may be a linear chain or a branched chain. Further, the number of carbon atoms thereof is preferably 2 to 4.

Further, the trivalent hydrocarbon group is preferably a trivalent aliphatic hydrocarbon group and more preferably an alkanetriyl group. Specific examples thereof include an ethane-1,1,2-triyl group.

Examples of the hydroxyl group-containing non-crosslinkable unsaturated monomer include glycerol mono(meth)acrylate, trimethylolethane mono(meth)acrylate, trimethylolpropane mono(meth)acrylate, butanetriol mono(meth)acrylate, polyethylene glycol mono(meth)acrylate, pentaerythritol mono(meth)acrylate, dipentaerythritol mono(meth)acrylate, inositol mono (meth)acrylate, hydroxyethyl (meth)acrylate, hydroxypropyl (meth)acrylate, and hydroxyethyl (meth) acrylamide, and these can be used alone or in combination of two or more thereof.

Further, from the viewpoint of dynamic binding capacity and antifouling properties, the total used amount of the hydroxyl group-containing non-crosslinkable unsaturated monomer is preferably 0 to 70 parts by mass, more preferably 3 to 50 parts by mass, and particularly preferably 5 to 20 parts by mass, with respect to 100 parts by weight of the total amount of the monomer.

Further, as the non-crosslinkable unsaturated monomer not containing a hydroxyl group, a (meth) acrylate-based monomer and a (meth)acrylamide-based monomer are preferable, and a (meth)acrylate-based monomer is more preferable. Of them, a (meth)acrylate-based monomer represented by the following Formula (9) is particularly preferable.

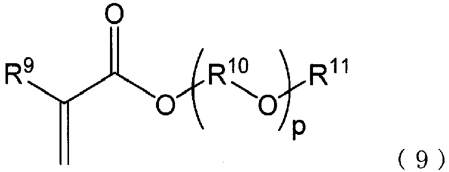

[In Formula (9),
R⁹ represents a hydrogen atom or a methyl group,
R¹⁰ represents an alkanediyl group having 2 to 4 carbon atoms,
R¹¹ represents a monovalent hydrocarbon group having 1 to 6 carbon atoms, and
p represents an integer of 0 to 50.]

The number of carbon atoms of the alkanediyl group represented by R¹⁰ is preferably 2 or 3 and more preferably 2. Further, such an alkanediyl group may be a linear chain or a branched chain. Specific examples thereof include an ethane-1,1-diyl group, an ethane-1,2-diyl group, a propane-1,1-diyl group, a propane-1,2-diyl group, a propane-1,3-diyl group, a propane-2,2-diyl group, a butane-1,2-diyl group, a butane-1,3-diyl group, and a butane-1,4-diyl group.

The number of carbon atoms of the monovalent hydrocarbon group represented by R¹¹ is preferably 1 to 4 and more preferably 1 or 2.

The monovalent hydrocarbon group encompasses the concept including a monovalent aliphatic hydrocarbon group, a monovalent alicyclic hydrocarbon group, and a monovalent aromatic hydrocarbon group, and a monovalent aliphatic hydrocarbon group is preferable. The monovalent aliphatic hydrocarbon group may be a linear chain or a branched chain.

An alkyl group is preferable as the monovalent aliphatic hydrocarbon group, and the number of carbon atoms of such an alkyl group is preferably 1 to 4 and more preferably 1 or 2.

Specific examples of the alkyl group include a methyl group, an ethyl group, an n-propyl group, an isopropyl group, an n-butyl group, an isobutyl group, a sec-butyl group, a tert-butyl group, a pentyl group, and a hexyl group.

p represents an integer of 0 to 50, and is preferably an integer of 1 to 25 and more preferably an integer of 1 to 15.

Examples of the non-crosslinkable unsaturated monomer not containing a hydroxyl group include methoxypolyethylene glycol (meth)acrylate, methyl (meth)acrylate, ethyl (meth)acrylate, butyl (meth)acrylate, cyclohexyl (meth)acrylate, methoxyethyl (meth)acrylate, (meth)acrylamide, dimethyl (meth)acrylamide, (meth)acryloylmorpholine, and diacetone (meth)acrylamide, and these can be used alone or in combination of two or more thereof.

Further, from the viewpoint of dynamic binding capacity and antifouling properties, the total used amount of the non-crosslinkable unsaturated monomer not containing a hydroxyl group is preferably 0 to 70 parts by mass, more preferably 3 to 50 parts by mass, and particularly preferably 5 to 30 parts by mass, with respect to 100 parts by mass of the total amount of the monomer.

Further, as the hydroxyl group-containing crosslinkable unsaturated monomer, those having a functionality of 2 to 5 are preferable and those having a functionality of 2 or 3 are more preferable. Further, the number of hydroxyl groups contained in the hydroxyl group-containing crosslinkable unsaturated monomer is preferably 1 to 5 and more preferably 1 to 3, from the viewpoint of dynamic binding capacity and antifouling properties.

Further, a (meth) acrylate-based monomer is preferable as the hydroxyl group-containing crosslinkable unsaturated monomer. In particular, a (meth)acrylate-based monomer represented by the following Formula (10) is particularly preferable.

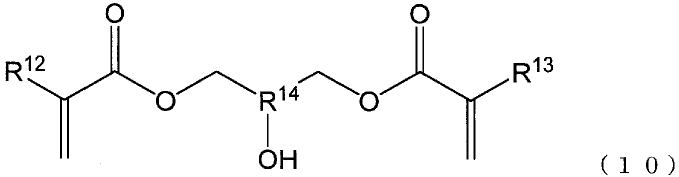

[In Formula (10),
R¹² and R¹³ each independently represent a hydrogen atom or a methyl group, and
R¹⁴ represents a trivalent hydrocarbon group having 1 to 8 carbon atoms.]

The trivalent hydrocarbon group represented by R¹⁴ may be a linear chain or a branched chain. Further, the number of carbon atoms thereof is preferably 1 to 5.

Further, the trivalent hydrocarbon group is preferably a trivalent aliphatic hydrocarbon group and more preferably an alkanetriyl group. Specific examples thereof include a methane-1,1,1-triyl group.

Examples of the hydroxyl group-containing crosslinkable unsaturated monomer include glycerin di(meth)acrylate, trimethylolethane di(meth)acrylate, trimethylolpropane di(meth)acrylate, butanetriol di(meth)acrylate, pentaerythritol di(meth)acrylate, pentaerythritol tri(meth)acrylate, dipentaerythritol di(meth)acrylate, dipentaerythritol tri(meth)acrylate, dipentaerythritol tetra(meth)acrylate, dipentaerythritol penta(meth)acrylate, inositol di(meth)acrylate, inositol tri(meth)acrylate, and inositol tetra(meth)acrylate, and there can be used alone or in combination of two or more thereof.

When the hydroxyl group-containing crosslinkable unsaturated monomer is used, from the viewpoint of dynamic binding capacity and antifouling properties, the total used amount thereof is preferably 0 to 70 parts by mass, more preferably 3 to 50 parts by mass, and preferably 5 to 20 parts by mass, with respect to 100 parts by mass of the total amount of the monomer.

Further, as the crosslinkable unsaturated monomer not containing a hydroxyl group, those having a functionality of 2 to 5 are preferable and those having a functionality of 2 or 3 are more preferable.

Further, a (meth) acrylate-based monomer is preferable as the crosslinkable unsaturated monomer not containing a hydroxyl group. In particular, a (meth)acrylate-based monomer represented by the following Formula (11) or (12) is particularly preferable.

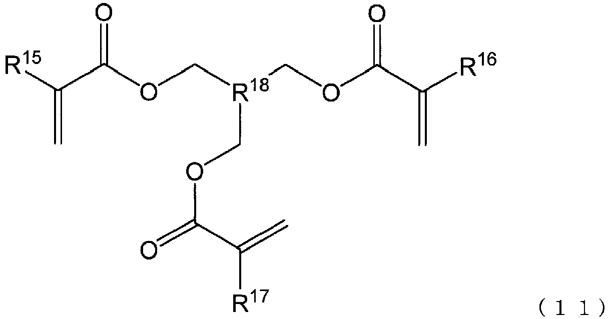

[In Formula (11),
R¹⁵ to R¹⁷ each independently represent a hydrogen atom or a methyl group, and
R¹⁸ represents a trivalent hydrocarbon group having 1 to 6 carbon atoms.]

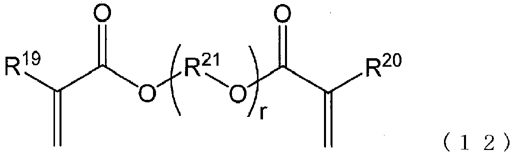

[In Formula (12),
R¹⁹ and R²⁰ each independently represent a hydrogen atom or a methyl group,
R²¹ represents an alkanediyl group having 2 to 4 carbon atoms, and
r represents an integer of 1 to 50.]

The trivalent hydrocarbon group represented by R¹⁸ in Formula (11) may be a linear chain or a branched chain. Further, the number of carbon atoms thereof is preferably 2 to 4.

Further, the trivalent hydrocarbon group is preferably a trivalent aliphatic hydrocarbon group and more preferably an alkanetriyl group. Specific examples thereof include a propane-1,1,1-triyl group.

Further, the number of carbon atoms of the alkanediyl group represented by R²¹ in Formula (12) is preferably 2 or 3 and more preferably 2. Further, such an alkanediyl group may be a linear chain or a branched chain. Specific examples thereof include an ethane-1,1-diyl group, an ethane-1,2-diyl group, a propane-1,1-diyl group, a propane-1,2-diyl group, a propane-1,3-diyl group, a propane-2,2-diyl group, a butane-1,2-diyl group, a butane-1,3-diyl group, and a butane-1,4-diyl group.

Further, r represents an integer of 1 to 50, and is preferably an integer of 1 to 30, more preferably an integer of 1 to 25, even more preferably an integer of 1 to 20, even more preferably an integer of 1 to 15, and particularly preferably an integer of 1 to 10.

Examples of the crosslinkable unsaturated monomer not containing a hydroxyl group include trimethylolpropane tri(meth)acrylate, (poly)ethylene glycol di(meth)acrylate, (poly)propylene glycol di(meth)acrylate, 1,4-butanediol di(meth)acrylate, 1,6-hexanediol di(meth)acrylate, and pentaerythritol tetra (meth) acrylate, and these can be used alone or in combination of two or more thereof.

Further, from the viewpoint of dynamic binding capacity and antifouling properties, the total used amount of the crosslinkable unsaturated monomer not containing a hydroxyl group is preferably 1 to 90 parts by mass, more preferably 5 to 70 parts by mass, even more preferably 10 to 60 parts by mass, and particularly preferably 20 to 50 parts by mass, with respect to 100 parts by mass of the total amount of the monomer.

From the viewpoint of dynamic binding capacity when a ligand is immobilized and antifouling properties, as a combination of a monomer having a functional group capable of fixing a ligand and another monomer, a combination including a monomer having a functional group capable of fixing a ligand and at least a hydroxyl group-containing non-crosslinkable unsaturated monomer and a crosslinkable unsaturated monomer not containing a hydroxyl group is preferable, a combination of a monomer having a functional group capable of fixing a ligand, a hydroxyl group-containing non-crosslinkable unsaturated monomer, and a crosslinkable unsaturated monomer not containing a hydroxyl group and a combination of a monomer having a functional group capable of fixing a ligand, a hydroxyl group-containing non-crosslinkable unsaturated monomer, a non-crosslinkable unsaturated monomer not containing a hydroxyl group, and a crosslinkable unsaturated monomer not containing a hydroxyl group are more preferable, and a combination of a monomer having a functional group capable of fixing a ligand, a hydroxyl group-containing non-crosslinkable unsaturated monomer, and a crosslinkable unsaturated monomer not containing a hydroxyl group is particularly preferable.

Further, examples of the specific method of Steps 1-1 and 2-1 include a method of dissolving a polymerization initiator in a mixed solution containing a monomer and, as necessary, a pore-forming agent (monomer solution), suspending the resultant solution in an aqueous medium, and polymerizing the suspended solution by heating to a predetermined temperature, a method of dissolving a polymerization initiator in a mixed solution containing a monomer and, as necessary, a pore-forming agent (monomer solution), adding the resultant solution to an aqueous medium which has been heated to a predetermined temperature, and polymerizing the resultant mixture, and a method of suspending a mixed solution containing a monomer and, as necessary, a pore-forming agent (monomer solution) in an aqueous medium, heating the suspended solution to a predetermined temperature, and polymerizing the resultant solution by adding a polymerization initiator.

As the polymerization initiator, radical polymerization initiators are preferable. Examples of the radical polymerization initiators include azo-based initiators, peroxide-based initiators, and redox-based initiator, and specific examples thereof include azobisisobutyronitrile, methyl azobisisobutyrate, azobis-2,4-dimethyl valeronitrile, benzoyl peroxide, di-tert-butyl peroxide, and benzoyl peroxide-dimethylaniline. The total used amount of the polymerization initiator is generally about 0.01 to 10 parts by mass with respect to 100 parts by mass of the total amount of the monomer.

The pore-forming agent is used for producing porous particles, is present with the monomers in polymerization in oil droplets, and has a role in forming pores as a non-polymerizable component. The pore-forming agent is not particularly limited as long as it can be easily removed on the porous surface, and examples thereof include linear polymers which are soluble in various organic solvents and a mixed monomer . These may be used in combination.

Examples of the pore-forming agent include aliphatic hydrocarbons such as hexane, heptane, octane, nonane, decane, and undecane; alicyclic hydrocarbons such as cyclohexane and cyclopentane; aromatic hydrocarbons such as benzene, toluene, xylene, naphthalene, and ethylbenzene; halogenated hydrocarbons such as carbon tetrachloride, 1,2-dichloroethane, tetrachloroethane, and chlorobenzene; aliphatic alcohols such as butanol, pentanol, hexanol, heptanol, hexanol, 4-methyl-2-pentanol, and2-ethyl-1-hexanol; alicyclic alcohols such as cyclohexanol; aromatic alcohols such as 2-phenylethyl alcohol and benzyl alcohol; ketones such as diethyl ketone, methyl isobutyl ketone, diisobutyl ketone, acetophenone, 2-octanone, and cyclohexanone; ethers such as dibutyl ether, diisobutyl ether, anisole, and ethoxybenzene; and esters such as isopentyl acetate, butyl acetate, 3-methoxybutyl acetate, and diethyl malonate, as well as linear polymers such as homopolymers of non-crosslinkable vinyl monomers. These pore-forming agents can be used alone or in combination of two or more thereof.

The total used amount of the pore-forming agent is generally about 40 to 400 parts by mass with respect to 100 parts by mass of the total amount of the monomer.

Examples of the aqueous medium include aqueous solutions of water-soluble polymers, and examples of the water-soluble polymers include hydroxyethyl cellulose, polyvinyl alcohol, carboxymethyl cellulose, polyvinylpyrrolidone, starch, and gelatin.

The total used amount of the aqueous medium is generally about 200 to 7000 parts by mass with respect to 100 parts by mass of the total amount of the monomer.

Further, when water is used as the dispersion medium of the aqueous medium, for example, a dispersion stabilizer such as sodium chloride, sodium sulfate, sodium carbonate, calcium carbonate, or calcium phosphate may be used.

Further, in Steps 1-1 and 2-1, various surfactants including anionic surfactants such as alkyl sulfate salts, alkylaryl sulfate salts, alkyl phosphate salts, and fatty acid salts may be used.

Further, a polymerization inhibitor such as a nitrite salt (for example, sodium nitrite), an iodide salt (for example, potassium iodide), tert-butylpyrocatechol, benzoquinone, picric acid, hydroquinone, copper chloride, or ferric chloride can also be used.

Further, a polymerization regulator such as dodecyl mercaptan may be used.

Further, the polymerization temperature in Steps 1-1 and 2-1 may depends on a polymerization initiator, and for example, when azobisisobutyronitrile is used as a polymerization initiator, the polymerization temperature is preferably 50 to 100°C and more preferably 60 to 90°C.

Further, the polymerization time is generally 5 minutes to 48 hours and preferably 10 minutes to 24 hours.

### <Steps 1-2 and 2-2>

Step 1-2 is a step of obtaining a solid-phase carrier having a functional group capable of fixing a ligand and a group represented by the following Formula (5-1), (5-2) or (5-3) by bringing the raw material carrier (I) into contact with a compound represented by the following Formula (4).

Further, Step 2-2 is a step of obtaining the sulfide group-containing solid-phase carrier (II) by bringing the raw material carrier (I) into contact with the compound represented by the following Formula (4) in which Y is a sulfide group.

R²-Y-H (4)

[In Formula (4),
Y represents a sulfide group, an oxy group or an imino group, and
R² has the same meaning as defined above and represents a monovalent organic group having 1 to 10 carbon atoms.]

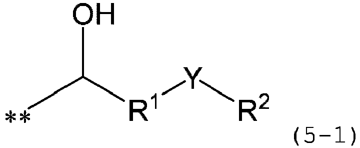

[In Formula (5-1),
R¹ has the same meaning as defined above and represents a divalent hydrocarbon group having 1 to 6 carbon atoms,
R² has the same meaning as defined above and represents a monovalent organic group having 1 to 10 carbon atoms,
Y has the same meaning as defined above and represents a sulfide group, an oxy group or an imino group, and
** represents a bond.]

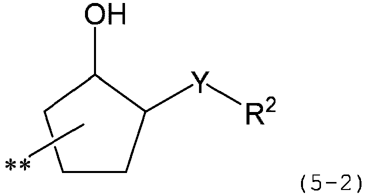

[In Formula (5-2), R², Y, and ** have the same meaning as defined above.]

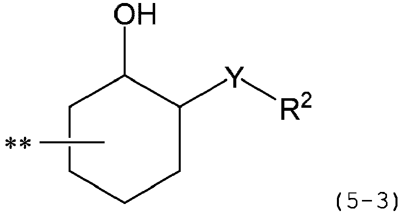

[In Formula (5-3), R², Y, and ** have the same meaning as defined above.]

Examples of the compound (4) used in Steps 1-2 and 2-2 include thioglycerol, mercaptoethanol, and monoethanolamine, and thioglycerol is preferable.

The total used amount of the compound (4) is generally 0.1 to 12 molar equivalent, preferably 1 to 10 molar equivalent, and more preferably 2 to 8 molar equivalent per mole of the functional group capable of fixing a ligand.

Steps 1-2 and 2-2 may be performed in the presence of a basic catalyst. Examples of such a basic catalyst include triethylamine, N,N-dimethyl-4-aminopyridine, and diisopropylethylamine, and these can be used alone or in combination of two or more thereof.

Further, the reaction time of Steps 1-2 and 2-2 is not particularly limited, and is generally about 0.5 to 72 hours and preferably 1 to 48 hours. Further, the reaction temperature may be appropriately selected from a temperature equal to or lower than a boiling point of the solvent, and is generally about 2 to 100°C.

### <Step 2-3>

Step 2-3 is a step of obtaining a solid-phase carrier having a functional group capable of fixing a ligand and a group represented by the following Formula (6-1), (6-2) or (6-3) by bringing the sulfide group-containing solid-phase carrier (II) obtained in Step 2-2 into contact with an oxidant to oxidize a sulfide group to a sulfinyl group.

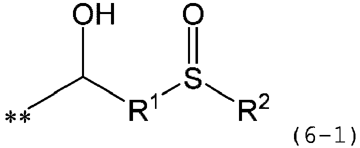

[In Formula (6-1), R¹, R², and ** have the same meaning as defined above.]

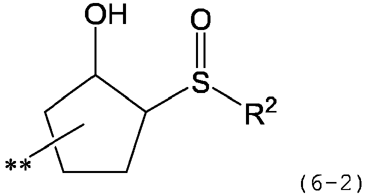

[In Formula (6-2) , R² and ** have the same meaning as defined above.]

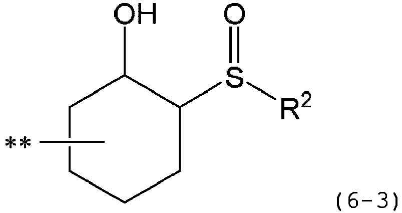

[In Formula (6-3) , R² and ** have the same meaning as defined above.]

The oxidant to be used in Step 2-3 is roughly divided into an organic oxidant and an inorganic oxidant, and examples of the organic oxidant include peracetic acid, perbenzoic acid, and m-chloroperbenzoic acid. Meanwhile, examples of the inorganic oxidant include hydrogen peroxide, chromic acid, and permanganate . These oxidants can be used alone or in combination of two or more thereof.

Further, the total used amount of the oxidant is generally about 0.1 to 10 molar equivalent and preferably 0.5 to 3 molar equivalent per mole of the sulfide group.

Further, Step 2-3 is preferably performed in the presence of a solvent. Examples of such a solvent include water; amide-based solvents such as dimethylformamide and dimethylacetamide; and alcohol-based solvents such as methanol and ethanol, and these can be used alone or in combination of two or more thereof.

The total used amount of the solvent is generally about 1 to 50 times by mass and preferably 5 to 15 times by mass with respect to the solid-phase carrier as a raw material.

Further, the reaction time of Step 2-3 is not particularly limited, and is generally about 1 to 72 hours, and the reaction temperature may be appropriately selected from a temperature equal to or lower than a boiling point of the solvent, and is generally about 1 to 90°C.

The solid-phase carrier to be obtained by each step described above can be obtained by removing the pore-forming agent and the unreacted monomer by, for example, distillation, extraction or washing, as necessary.

Further, the solid-phase carrier A of the present invention to be obtained as described above exhibits high dynamic binding capacity when a ligand is immobilized, has excellent antifouling properties, and is unlikely to have non-specific adsorption of impurities such as a host cell protein (HCP).

The solid-phase carrier A of the present invention is useful as a solid-phase carrier to be used for a filler for affinity chromatography, a flow passage, or a sensor chip or the like.

### <Production Method C of Filler for Affinity Chromatography>

The production method C of the filler for affinity chromatography of the present invention is characterized by including a step of fixing a ligand to the solid-phase carrier A of the present invention.

The ligand may be a molecule to be bound to a target substance, and examples thereof include proteins such as Protein A, Protein G, Protein L, Fc binding protein, and avidin; peptides such as insulin; antibodies such as monoclonal antibodies; enzymes; hormones; DNA; RNA; carbohydrates such as heparin, Lewis X, and gangliosides; and low-molecular-weight compounds such as iminodiacetic acid, synthetic dyes, 2-aminophenylboronic acid, 4-aminobenzamidine, glutathione, biotin, and derivative thereof . The above-exemplified ligands may be used as a whole molecule, or the fragments thereof obtainable by, for example, recombination or enzyme treatment may also be used. Further, artificially synthesized peptides or peptide derivatives may also be used.

Among these ligands, when a refined target substance is an antibody, those containing an amino group are preferable, proteins and peptides are more preferable, proteins are even more preferable, and an immunoglobulin-binding protein is even more preferable. As the immunoglobulin-binding protein, at least one or more selected from the group consisting of Protein A, Protein G, Protein L, Fc binding protein, and functional mutants thereof are preferable. Among these, Protein A, Protein G, and functional mutants thereof are preferable, and Protein A and functional mutants thereof are more preferable.

Further, the total used amount of the ligand is generally about 50 to 300 mg per gram of the solid-phase carrier A, and is preferably 120 to 180 mg.

The fixation of a ligand may be performed in the same manner as in a normal method, except that the solid-phase carrier A is used, and is preferably performed in a buffer solution with a salt added.

Examples of the type of the salt include trisodium citrate and sodium sulfate, and examples of the buffer solution include a sodium phosphate buffer solution, a potassium phosphate buffer solution, and a boric acid buffer solution.

The total used amount of the buffer solution is generally about 20 to 80 times by mass and preferably 35 to 45 times by mass with respect to the solid-phase carrier A.

Further, the reaction time is not particularly limited, and is generally about 0.5 to 72 hours and the reaction temperature is generally about 1 to 40°C.

Further, in the production method C of the filler of the present invention, after the fixation step, the obtained filler for affinity chromatography may be brought into contact with the compound represented by Formula (4) and the unreacted functional group capable of fixing a ligand may be allowed to react. Further, the filler for affinity chromatography may be brought into contact with an oxidant after the reaction.

According to this, the functional group to which a ligand is not bound is converted to a group represented by Formula (2-1), (2-2) or (2-3).

Further, according to the production method C of the filler of the present invention, it is possible to simply and easily produce a filler for affinity chromatography having high dynamic binding capacity and excellent antifouling properties.

### Examples

Hereinafter, the present invention will be described in detail by means of examples, however, the present invention is not limited to these examples.

Each analysis condition in Examples 1 to 5 and Comparative Examples 1 and 2 will be described below.

### (Volume Average Particle Diameter)

The average particle diameter was measured using a laser diffraction scattering type particle size distribution analyzer (LS13320 manufactured by Beckman Coulter, Inc.).

### (Specific Surface Area)

The specific surface area was measured using a mercury porosimeter (Autopore IV9520 manufactured by Shimadzu Corporation) and the measurement range of the fine pore diameter was set to 10 to 5000 nm.

### <Example 1>

### (Example 1-1)

(1) To 360 g of pure water, 0.72 g of polyvinyl alcohol (PVA-217 manufactured by Kuraray Co., Ltd.) was added and heated under stirring to dissolve polyvinyl alcohol, the resultant solution was cooled, and then 0.18 g of sodium dodecyl sulfate (EMAL 10G manufactured by Kao Corporation), 0.36 g of sodium carbonate (manufactured by Wako Pure Chemical Industries, Ltd.), and 0.18 g of sodium nitrite (manufactured by Wako Pure Chemical Industries, Ltd.) were added thereto and stirred to prepare an aqueous solution (S-1).

Meanwhile, a monomer composition consisting of 6.88 g of glycidyl methacrylate (manufactured by Mitsubishi Rayon Co., Ltd.), 1.37 g of glycerol monomethacrylate (manufactured by NOF CORPORATION), 4.12 g of trimethylolpropane trimethacrylate (manufactured by Sartomer USA LLC.), and 1.37 g of polyethylene glycol #400 dimethacrylate (manufactured by Shin Nakamura Chemical Co., Ltd., 9G) was dissolved in a mixed solution of 20.63 g of 2-octanone (manufactured by Toyo Gosei Co., Ltd.) and 5.30 g of acetophenone (manufactured by INOUE PERFUMERY MFG. CO., LTD.) to prepare a monomer solution (M-1).

Subsequently, the entire amount of the aqueous solution (S-1) was fed into a 500 mL separable flask, the separable flask was equipped with a thermometer, a stirring blade, and a cooling tube and was set to a hot water bath, and stirring was started under a nitrogen atmosphere. The entire amount of the monomer solution (M-1) was fed into the separable flask, the separable flask was heated by the hot water bath, 0.53 g of 2,2'-azoisobutyronitrile (manufactured by Wako Pure Chemical Industries, Ltd.) was added thereto when the internal temperature reached 85°C, and the internal temperature was maintained at 86°C.

(2) Thereafter, 31.39 g of thioglycerol (manufactured by ASAHI KAGAKU KOGYO Co., Ltd.) was added to the reaction solution, and while the temperature was maintained at 86°C, stirring was performed for 3 hours to obtain thioglycerol-treated particles (PA-1).

Subsequently, the reaction solution was cooled, and then this reaction solution was filtered and washed with pure water and ethanol. The washed particles (PA-1) were dispersed in pure water and decantation was carried out three times to remove small particles. The particles thus obtained were used as thioglycerol-treated particles (PA-2).

Subsequently, the particles were dispersed in pure water such that the concentration of the particles became 10% by mass, thereby obtaining a dispersion solution of the thioglycerol-treated particles (PA-2) corresponding to the solid-phase carrier A of the present invention. The dispersion solution thus obtained was used as a dispersion solution (L-1).

### (Example 1-2)

After 4.30 g of hydrogen peroxide (manufactured by Wako Pure Chemical Industries, Ltd.) was added to the dispersion solution (L-1) obtained in Example 1-1, inversion mixing was performed for 24 hours at 25°C so that the particles were sulfoxidated. Thereafter, this reaction solution was filtered and washed with pure water. Subsequently, the particles were dispersed in pure water such that the concentration of the particles became 10% by mass, thereby obtaining a dispersion solution of sulfoxidated particles (PA-3) corresponding to the solid-phase carrier A of the present invention. The dispersion solution thus obtained was used as a sulfoxidated particle dispersion solution (L-2).

### (Example 1-3)

0.15 g of modified Protein A represented by amino acid sequence of SEQ ID NO. 2 which was prepared by introducing a vector where DNA containing the base sequence represented by SEQ ID NO. 1 was inserted in pET-24 (a) in a host (Escherichia coli BL21 (DE3)) and in which genetically modified Escherichia coli was expressed, was dispersed in 40 mL of buffer (pH 6.6) of 1.0 M trisodium citrate/0.1 M sodium phosphate to obtain a Protein A dispersion solution. The sulfoxidated particle dispersion solution (L-2) obtained in Example 1-2 (1 g in terms of dry particle mass) was added to this Protein A dispersion solution. The obtained dispersion solution was stirred with shaking for 5 hours at 25°C so that Protein A was fixed to the particles.

The generated Protein A-fixed particles were washed with a 0.1 M sodium phosphate buffer (pH 7.6) and then dispersed in 40 mL of aqueous solution (pH 8.3) of 1.0 M thioglycerol/0.1 M sodium sulfate, and stirring with shaking was carried out for 17 hours at 25°C so that an unreacted epoxy group was ring-opened by an excessive amount of thioglycerol.

Thereafter, washing was sequentially performed with a 0.1 M sodium phosphate buffer (pH 7.6), a 0.5 M sodium hydroxide aqueous solution, and a 0.1 M sodium citrate buffer (pH 3.2) to obtain a filler 1 for affinity chromatography.

The volume average particle diameter of the filler 1 for affinity chromatography was 64 µm and the specific surface area thereof was 93 m²/g.

### <Example 2>

0.15 g of modified Protein A represented by amino acid sequence of SEQ ID NO. 2 which was prepared by introducing a vector where DNA containing the base sequence represented by SEQ ID NO. 1 was inserted in pET-24 (a) in a host (Escherichia coli BL21 (DE3)) and in which genetically modified Escherichia coli was expressed, was dispersed in 40 mL of buffer (pH 6.6) of 1.0 M trisodium citrate/0.1 M sodium phosphate to obtain a Protein A dispersion solution, and the dispersion solution (L-1) obtained in Example 1-1 (1 g in terms of dry particle mass) was added to this Protein A dispersion solution. The obtained dispersion solution was stirred with shaking for 5 hours at 25°C so that Protein A was fixed to the particles.

The generated Protein A-fixed particles were washed with a 0.1 M sodium phosphate buffer (pH 7.6) and then dispersed in 40 mL of aqueous solution (pH 8.3) of 1.0 M thioglycerol/0.1 M sodium sulfate, and stirring with shaking was carried out for 17 hours at 25°C so that an unreacted epoxy group was ring-opened by an excessive amount of thioglycerol.

Thereafter, washing was sequentially performed with a 0.1 M sodium phosphate buffer (pH 7.6), a 0.5 M sodium hydroxide aqueous solution, and a 0.1 M sodium citrate buffer (pH 3.2) to obtain a filler 2 for affinity chromatography.

The volume average particle diameter of the filler 2 for affinity chromatography was 64 µm and the specific surface area thereof was 92 m²/g.

### <Example 3>

A filler 3 for affinity chromatography was obtained by the same operations as in Examples 1-1 to 1-3, except that the monomer composition was changed to a monomer composition consisting of 6.88 g of glycidyl methacrylate (manufactured by Mitsubishi Rayon Co., Ltd.), 1.38 g of glycerol monomethacrylate (manufactured by NOF CORPORATION), 3.03 g of trimethylolpropane trimethacrylate (manufactured by Sartomer USA LLC.), and 2.48 g of polyethylene glycol #400 dimethacrylate (manufactured by Shin Nakamura Chemical Co., Ltd., 9G).

The volume average particle diameter of the filler 3 for affinity chromatography was 67 µm and the specific surface area thereof was 92 m²/g.

### <Example 4>

A filler 4 for affinity chromatography was obtained by the same operations as in Examples 1-1 to 1-3, except that the monomer composition was changed to a monomer composition consisting of 6.87 g of glycidyl methacrylate (manufactured by Mitsubishi Rayon Co., Ltd.), 1.37 g of glycerol monomethacrylate (manufactured by NOF CORPORATION), 4.12 g of trimethylolpropane trimethacrylate (manufactured by Sartomer USA LLC.), and 1.37 g of methoxypolyethylene glycol #400 methacrylate (manufactured by Shin Nakamura Chemical Co., Ltd., M-90G).

The volume average particle diameter of the filler 4 for affinity chromatography was 70 µm and the specific surface area thereof was 94 m²/g.

### <Example 5>

A filler 5 for affinity chromatography was obtained by the same operations as in Examples 1-1 to 1-3, except that the monomer composition was changed to a monomer composition consisting of 7.41 g of glycidyl methacrylate (manufactured by Mitsubishi Rayon Co., Ltd.), 1.37 g of glycerol monomethacrylate (manufactured by NOF CORPORATION), and 4.94 g of trimethylolpropane trimethacrylate (manufactured by Sartomer USA LLC.), the used amount of 2,2'-azoisobutyronitrile was changed from 0.53 g to 0.93 g, and the added amount of thioglycerol in (2) of Example 1-1 was changed from 31.39 g to 56.37 g. The addition step of thioglycerol was regarded as (2) of Example 5.

The volume average particle diameter of the filler 5 for affinity chromatography was 67 µm and the specific surface area thereof was 95 m²/g.

### <Comparative Example 1>

A filler 6 for affinity chromatography was obtained by the same operations as in Examples 1-1 to 1-3, except that the addition of thioglycerol in (2) of Example 1-1 and sulfoxidation using hydrogen peroxide (step of Example 1-2) were not performed.

The volume average particle diameter of the filler 6 for affinity chromatography was 86 µm and the specific surface area thereof was 97 m²/g.

### <Comparative Example 2>

A filler 7 for affinity chromatography was obtained by the same operation as in Example 5, except that the addition of thioglycerol in (2) of Example 5 and sulfoxidation using hydrogen peroxide (step of Example 1-2) were not performed.

The volume average particle diameter of the filler 7 for affinity chromatography was 74 µm and the specific surface area thereof was 95 m²/g.

### <Test Example 1: Test for Measuring Dynamic Binding Capacity (DBC)>

The DBC of the fillers 1 to 7 of Examples 1 to 5 and Comparative Examples 1 and 2 with respect to a protein (human IgG antibody, HGG-1000 manufactured by Equitech Bio, Inc.) was measured at a linear flow rate of 60 cm/hr by using AKTAprime plus manufactured by GE Healthcare . The column container having a capacity of 4 mL (5 mmφ × 200 mm in length) was used, the protein diluted to 25 mg/mL with an aqueous solution (pH 7.5) of 20 mM sodium phosphate/150 mM sodium chloride was used, and the container was filled with 4 mL of the filler. The DBC was calculated from the captured amount of the protein and the column filling volume at an elution peak of 10% breakthrough. The results thereof are presented in Table 1.

### <Test Example 2: Test for Antifouling Properties>

Into a syringe column (inner diameter of 1.5 cm), each of 2 mL of the fillers 1 to 7 of Example 1 to 5 and Comparative Examples 1 and 2 was filled, it was replaced with an aqueous solution (pH7.5) of 20 mM sodiumphosphate/150 mM sodium chloride, and then 10 mL of aqueous solution (pH 7.5) of 20 mM sodium phosphate/150 mM sodium chloride in which a phenol red was dissolved such that the concentration became 0.0015% by mass, was allowed to flow.

Subsequently, washing was carried out with 10 mL of aqueous solution (pH7.5) of 20 mM sodiumphosphate/150 mM sodium chloride, 10 mL of aqueous solution (pH 3.2) of 50 mM sodium citrate and 10 mL of aqueous solution (pH 7.5) of 20 mM sodium phosphate/150 mM sodium chloride were allowed to sequentially flow. Next, 10 mL of aqueous solution of 0.5 M sodium hydroxide was allowed to flow, and the antifouling properties of the fillers were visually evaluated in accordance with the following evaluation criteria. The results thereof are presented in Table 1.

### (Antifouling Properties Evaluation Criteria)

4: Coloration cannot almost be recognized.
3: Coloration can be recognized slightly.
2: Coloration can be recognized.
1: Severe coloration can be recognized clearly.

**[Table 1]**

| | Monomer composition (part by mass) | | | | | Thioglycerol treatment before Protein A fixation | Sulfoxidataion | DBC (mg/mL) | Antifouling properties |
|---|---|---|---|---|---|---|---|---|---|
| | GMA | GLM | TMP | PEGDM | MPEGM | | | | |
| Example 1 | 50 | 10 | 30 | 10 | 0 | Performed | Performed | 60 | 3 |
| Example 2 | 50 | 10 | 30 | 10 | 0 | Performed | Not performed | 57 | 2 |
| Example 3 | 50 | 10 | 22 | 18 | 0 | Performed | Performed | 60 | 4 |
| Example 4 | 50 | 10 | 30 | 0 | 10 | Performed | Performed | 58 | 4 |
| Example 5 | 54 | 10 | 36 | 0 | 0 | Performed | Performed | 53 | 4 |
| Comparative Example 1 | 50 | 10 | 30 | 10 | 0 | Not performed | Not performed | 46 | 1 |
| Comparative Example 2 | 54 | 10 | 36 | 0 | 0 | Not performed | Not performed | 45 | 1 |

| | | | | | | | | | |
|---|---|---|---|---|---|---|---|---|---|
| GMA: glycidyl methacrylate, GLM: glycerol monomethacrylate, TMP: trimethylolpropane trimethacrylate, PEGDM: polyethylene glycol #400 dimethacrylate, MPEGM: methoxypolyethylene glycol #400 methacrylate | | | | | | | | | |

From the results of Test Examples 1 and 2 on the filler 2 of Example 2 and the filler 6 of the Comparative Example 1, it found that, when the thioglycerol treatment was performed before the Protein A fixation and the thioglycerol-treated particles were used as a solid-phase carrier, the obtained filler had large DBC and excellent antifouling properties.

Further, from the results of Test Examples 1 and 2 on the filler 1 of Example 1 and the filler 6 of the Comparative Example 1, it found that, when the thioglycerol-treated particles were sulfoxidated before the Protein A fixation and the sulfoxidated particles were used as a solid-phase carrier, the obtained filler had large DBC and excellent antifouling properties.

### <Example 6>

(1) A monomer composition consisting of 8.23 g of glycidyl methacrylate (manufactured by Mitsubishi Rayon Co., Ltd.), 1.37 gofglycerol monomethacrylate (manufacturedby NOF CORPORATION), and 4.12 g of trimethylolpropane trimethacrylate (manufactured by Sartomer USA LLC.) was dissolved in a mixed solution of 20.63 g of 2-octanone (manufactured by Toyo Gosei Co., Ltd.) and 5.30 g of acetophenone (manufactured by INOUE PERFUMERY MFG. CO., LTD.) to prepares a monomer solution (M-2).
   Subsequently, the entire amount of the aqueous solution (S-1) prepared in the same manner as in Example 1-1 was fed into a 500 mL separable flask, the separable flask was equipped with a thermometer, a stirring blade, and a cooling tube and was set to a hot water bath, and stirring was started under a nitrogen atmosphere. The entire amount of the monomer solution (M-2) was fed into the separable flask, the separable flask was heated by the hot water bath, 0.53 g of 2,2'-azoisobutyronitrile (manufactured by Wako Pure Chemical Industries, Ltd.) was added thereto when the internal temperature reached 85°C, and the internal temperature was maintained at 86°C.
(2) Thereafter, 6.26 g of thioglycerol (manufactured by ASAHI KAGAKU KOGYO Co., Ltd.) was added to the reaction solution, and while the temperature was maintained at 86°C, stirring was performed for 3 hours so that the polymerization reaction was performed in the presence of thioglycerol.
(3) Subsequently, the reaction solution was cooled, and then this reaction solution was filtered and washed with pure water and ethanol. The washed particles were dispersed in pure water and decantation was carried out three times to remove small particles. Then, the particles were dispersed in pure water such that the concentration of the particles became 10% by mass. This dispersion solution was used as a thioglycerol-treated particle dispersion solution (L-3).
(4) After 4.30 g of hydrogen peroxide (manufactured by Wako Pure Chemical Industries, Ltd.) was added to the thioglycerol-treated particle dispersion solution (L-3), inversion mixing was performed for 24 hours at 25°C so that the particles were sulfoxidated. Thereafter, this reaction solution was filtered and washed with pure water. Subsequently, the particles were dispersed in pure water such that the concentration of the particles became 10% by mass. This dispersion solution was used as a sulfoxidated particle dispersion solution (L-4).
(5) 0.15 g of modified Protein A represented by amino acid sequence of SEQ ID NO. 2 which was prepared by introducing a vector where DNA containing the base sequence represented by SEQ ID NO. 1 was inserted in pET-24 (a) in a host (Escherichia coli BL21 (DE3)) and in which genetically modified Escherichia coli was expressed, was dispersed in 40 mL of buffer (pH 6.6) of 1.0 M trisodium citrate/0.1 M sodium phosphate to obtain a Protein A dispersion solution. The sulfoxidated particle dispersion solution (L-4) (1 g in terms of dry particle mass) was added to this Protein A dispersion solution. This dispersion solution was stirred with shaking for 5 hours at 25°C to fix Protein A to the particles.

The generated Protein A-fixed particles were washed with a 0.1 M sodium phosphate buffer (pH 7.6) and then dispersed in 40 mL of aqueous solution (pH 8.3) of 1.0 M thioglycerol/0.1 M sodium sulfate, and stirring with shaking was carried out for 17 hours at 25°C so that an unreacted epoxy group was ring-opened by an excessive amount of thioglycerol.

Thereafter, washing was sequentially performed with a 0.1 M sodium phosphate buffer (pH 7.6), a 0.5 M sodium hydroxide aqueous solution, and a 0.1 M sodium citrate buffer (pH 3.2) to obtain a filler 8 for affinity chromatography.

### <Example 7>

A filler 9 for affinity chromatography was obtained by the same operation as in Example 6, except that the composition of the monomer composition was changed to 8.87 g of glycidyl methacrylate, 1.48 g of glycerol monomethacrylate, and 4.44 g of glycerin dimethacrylate (manufactured by Shin Nakamura Chemical Co., Ltd.) in the part of Step (1) of Example 6 and the addition of thioglycerol was changed to the addition of 4.88 g of 2-mercaptoethanol (manufactured by Tokyo Chemical Industry Co., Ltd.) in the part of Step (2).

### <Example 8>

A filler 10 for affinity chromatography was obtained by the same operation as in Example 6, except that the composition of the monomer composition was changed to 8.79 g of glycidyl methacrylate, 1.46 g of glycerol monomethacrylate, and 4.40 g of ethylene glycol dimethacrylate (manufactured by Shin Nakamura Chemical Co., Ltd.) in the part of Step (1) of Example 6 and the addition of thioglycerol was changed to the addition of 5.43 g of 3-mercapto-2-butanone (manufactured by Tokyo Chemical Industry Co., Ltd.) in the part of Step (2).

### <Example 9>

A filler 11 for affinity chromatography was obtained by the same operation as in Example 6, except that the composition of the monomer composition was changed to 8.86 g of glycidyl methacrylate, 0.74 g of glycerol monomethacrylate (manufactured by NOF CORPORATION), and 5.17 g of trimethylolpropane trimethacrylate in the part of Step (1) of Example 6, the addition of thioglycerol was changed to the addition of 4.81 g of 3-mercapto-1-propanol (manufactured by Tokyo Chemical Industry Co., Ltd.) in the part of Step (2), and sulfoxidation of particles in Step (4) was not performed.

### <Example 10>

The same operations as in Steps (1) and (2) of Example 6 were performed, except that the composition of the monomer composition was changed to 7.41 g of glycidyl methacrylate, 1.48 g of glycerol monomethacrylate, and 5.93 g of trimethylolpropane trimethacrylate in the part of Step (1) of Example 6.

Subsequently, the reaction solution was cooled to 25°C, 45.56 g of 3,6-dioxa-1,8-octanedithiol (manufacturedby MARUZEN CHEMICAL TRADING CO., LTD.) was added thereto, and the resultant solution was stirred for 30 minutes. Thereafter, the resultant mixture was heated again by a hot water bath, and while stirring was performed for 5 hours at the time point when the internal temperature reached 85°C, the temperature was maintained at 85°C. Thus, crosslinking was carried out using 3,6-dioxa-1,8-octanedithiol.

Thereafter, the same operations as in Steps (3) to (5) of Example 6 were performed to obtain a filler 12 for affinity chromatography.

### <Example 11>

A filler 13 for affinity chromatography was obtained by the same operation as in Example 6, except that the composition of the monomer composition was changed to 7.41 g of glycidyl methacrylate, 1.48 g of glycerol monomethacrylate, and 5.93 g of trimethylolpropane trimethacrylate in the part of Step (1) of Example 6 and the addition of thioglycerol was changed to the addition of 6.96 g of 3-mercaptoisobutyric acid in the part of Step (2).

### <Comparative Example 3>

A filler 14 for affinity chromatography was obtained by the same operation as in Example 6, except that the addition of thioglycerol in Step (2) was not performed after Step (1) of Example 6, the reaction solution was cooled to 25°C, and the same crosslinking as in Example 10 was carried out by adding 45.56 g of 3,6-dioxa-1,8-octanedithiol.

### <Comparative Example 4>

A filler 15 for affinity chromatography was obtained by the same operation as in Example 7, except that the addition of thioglycerol in Example 7 and sulfoxidation using hydrogen peroxide (Step (4) of Example 6) were not performed.

### <Test Example 3: Measurement of Average Particle Diameter>

The average particle diameter (volume average particle diameter) of the filler for affinity chromatography obtained in Examples 6 to 11 and Comparative Examples 3 and 4 was measured by a laser diffraction scattering type particle size distribution analyzer (LS13320 manufactured by Beckman Coulter, Inc.). The results thereof are presented in Table 2.

### <Test Example 4: Quantitative Determination of Binding Amount of Protein A>

The binding amount of Protein A as a ligand bound to the filler for affinity chromatography obtained in Examples 6 to 11 and Comparative Examples 3 and 4 was quantitatively determined by using a bicinchoninic acid (BCA) reagent. Specifically, 1 mg of a filler in terms of the solid content was collected in a test tube, and this was quantitatively determined by using a BCA Protein Assay Kit manufactured by Thermo Fisher Scientific K.K. The reaction was carried out by inversion mixing for 30 minutes at 37°C. The calibration curve was established by using the same samples as Protein A bound to the carrier. The results thereof are presented in Table 2.

### <Test Example 5: Test for Measuring Dynamic Binding Capacity (DBC) >

The DBC of each filler of Examples 6 to 11 and Comparative Examples 3 and 4 with respect to a protein (human IgG antibody, HGG-1000 manufactured by Equitech Bio, Inc.) was measured at a linear flow rate of 300 cm/hr by using AKTAprime plus manufactured by GE Healthcare. The column container having a capacity of 4 mL (5 mmφ × 200 mm in length) was used, the protein diluted to 5 mg/mL with an aqueous solution (pH 7.5) of 20 mM sodium phosphate/150 mM sodium chloride was used, and the container was filled with 4 mL of the filler. The DBC was calculated from the captured amount of the protein and the column filling volume at an elution peak of 10% breakthrough. The results thereof are presented in Table 2.

### <Test Example 6: Quantitative Determination of HCP>

Each filler of Examples 6 to 11 and Comparative Examples 3 and 4 was filled in a column container (Tricorn 10/50 column manufactured by GE Healthcare) at a filling height of about 5 cm to prepare a column. The obtained columns each were connected to AKTA Prime Plus manufactured by GE Healthcare, a 20 mM sodium phosphate buffer (pH 7.5) was allowed to flow at a column capacity of 5 (corresponding to five times the column volume) and a flow rate of 1 mL/min, and equilibrating was carried out.

Subsequently, CHO cell culture supernatant containing a monoclonal antibody, Trastuzumab, was allowed to flow through the column at a load amount of about 23 mg antibody/mL carrier and at a flow rate of 1 mL/min.

Subsequently, a 20 mM sodium phosphate buffer (pH 7.5), a buffer (pH 7.5) of 20 mM sodium phosphate/1 M sodium chloride, and a 20 mM sodium phosphate buffer (pH 7.5) each were allowed to sequentially flow through the column at a column capacity of 5 and a flow rate of 1 mL/min.

Thereafter, a 50 mM sodium citrate buffer (pH 3.2) was allowed to flow through the column at a flow rate of 1 mL/min, the monoclonal antibody captured in the column was eluted, and then Abs. 280>100 mAu of eluted fraction was recovered.

Then, the concentration (mg/mL) of the antibody contained in the recovered fraction was measured by using a spectrophotometer. Further, the concentration of the host cell protein (HCP) contained in the recovered fraction was measured by using CHO HCP ELISA kit, 3G manufactured by Cygnus Technologies Inc. Furthermore, the amount of HCP per unit antibody amount was calculated by dividing the concentration of HCP by the antibody concentration. The results thereof are presented in Table 2.

**[Table 2]**

| | | Monomer | | | | | Thiol | Post-cross-linking agent | Oxidant | Average particle diameter (µm) | PrA binding amount (mg/g) | DBC (mg/mL) | HCP (ppm) |
|---|---|---|---|---|---|---|---|---|---|---|---|---|---|
| | | GMA | GLM | TMP | GLDM | EDMA | | | | | | | |
| Example | 6 | 60 | 10 | 30 | - | - | Thioglycerol | None | H₂O₂ | 64 | 63 | 38.2 | 1103 |
| | 7 | 60 | 10 | - | 30 | - | 2-Mercaptoethanol | None | H₂O₂ | 69 | 66 | 39.1 | 1056 |
| | 8 | 60 | 10 | - | - | 30 | 3-Mercapto-2-butanone | None | H₂O₂ | 58 | 60 | 40.2 | 1098 |
| | 9 | 60 | 5 | 35 | - | - | 3-Mercapto-1-propanol | None | None | 71 | 67 | 38.8 | 1293 |
| | 10 | 50 | 10 | 40 | - | - | Thioglycerol | DMDO | H₂O₂ | 65 | 70 | 37.4 | 1171 |
| | 11 | 50 | 10 | 40 | - | - | 3-Mercaptoisobutyric acid | None | H₂O₂ | 65 | 72 | 39.4 | 1100 |
| Comparative Example | 3 | 60 | 10 | 30 | - | - | None | DMDO | H₂O₂ | 66 | 59 | 34.1 | 2582 |
| | 4 | 60 | 10 | - | 30 | - | None | None | None | 63 | 62 | 30.1 | 1748 |

| | | | | | | | | | | | | | |
|---|---|---|---|---|---|---|---|---|---|---|---|---|---|
| GMA: glycidyl methacrylate GLM: glycerol monomethacrylate TMP: trimethylolpropane trimethacrylate GLDM: glycerin dimethacrylate EDMA: ethylene glycol dimethacrylate DMDO: 3,6-dioxa-1,8-octanedithiol | | | | | | | | | | | | | |

From the results of Test Examples 5 and 6 on the fillers of Examples 6 to 11 and the fillers of Comparative Examples 3 and 4, it found that, when thioether was added during polymerization and a hydrophilic group was introduced in the terminal of the chain through a thio group, an excellent filler having large DBC and reduced HCP could be obtained.

## Claims

1. A solid-phase carrier having a functional group capable of fixing a ligand, wherein the functional group capable of fixing a ligand is a cyclic ether group, and a group represented by the following Formula (2-1), (2-2) or (2-3), wherein the Formula (2-1), (2-2) or (2-3) is represented by: 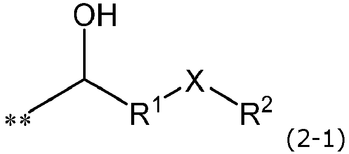
wherein R¹ represents an alkanediyl group having 1 to 6 carbon atoms,
R²
is represented by the following Formula (3): 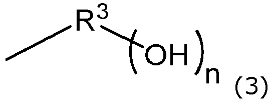 wherein R³ represents an alkanediyl or an alkanetriyl group having 1 to 10 carbon atoms, and n represents 1 or 2,
X represents a sulfinyl group, a sulfide group, an oxy group or an imino group, and
^{∗∗} represents a bond; 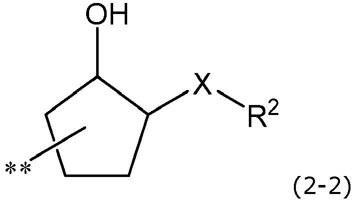
wherein R², X, and ^{∗∗} have the same meaning as defined above; and 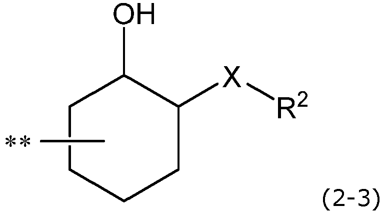
wherein R², X, and ^{∗∗} have the same meaning as defined above.

2. The solid-phase carrier according to claim 1, wherein the cyclic ether group is a group represented by the following Formula (1-1), (1-2) or (1-3): 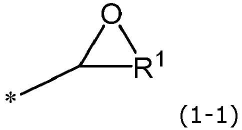 wherein R¹ represents a divalent hydrocarbon group having 1 to 6 carbon atoms, and
^{∗} represents a bond; 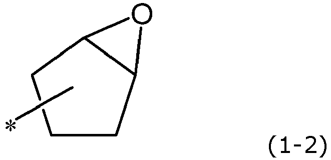 wherein ^{∗} has the same meaning as defined above; and 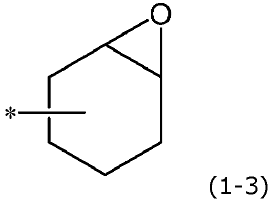 wherein ^{∗} has the same meaning as defined above.

3. The solid-phase carrier according to claim 1, wherein the number of carbon atoms of the group represented by R³ is 1 to 8.

4. A method for producing a filler for affinity chromatography, the method comprises,
fixing a ligand to the solid-phase carrier according to any one of claims 1 to 3.

## Patentansprüche

1. Festphasenträger mit einer funktionellen Gruppe, die in der Lage ist, einen Liganden zu fixieren, wobei die funktionelle Gruppe, die in der Lage ist, einen Liganden zu fixieren, eine zyklische Ethergruppe ist, und einer Gruppe, die durch die folgende Formel (2-1), (2-2) oder (2-3) dargestellt wird, wobei die Formel (2-1), (2-2) oder (2-3) dargestellt wird durch: 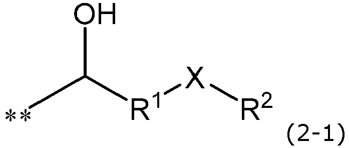
wobei R¹ eine Alkandiylgruppe mit 1 bis 6 Kohlenstoffatomen darstellt,
R²
durch die folgende Formel (3) dargestellt wird: 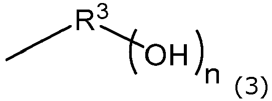 wobei R³ eine Alkandiyl- oder eine Alkantriylgruppe mit 1 bis 10 Kohlenstoffatomen darstellt, und n 1 oder 2 darstellt,
X stellt eine Sulfinylgruppe, eine Sulfidgruppe, eine Oxygruppe oder eine Iminogruppe dar, und
^{∗∗} eine Bindung darstellt; 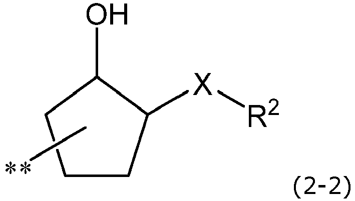
wobei R², X und ^{∗∗} die gleiche Bedeutung wie oben definiert haben; und 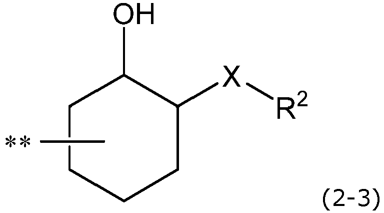
wobei R², X und ^{∗∗} die gleiche Bedeutung wie oben definiert haben.

2. Festphasenträger nach Anspruch 1, wobei die cyclische Ethergruppe eine Gruppe ist, die durch die folgenden Formeln (1-1), (1-2) oder (1-3) dargestellt wird: 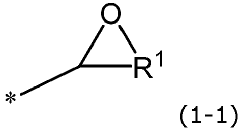 wobei R¹ eine zweiwertige Kohlenwasserstoffgruppe mit 1 bis 6 Kohlenstoffatomen darstellt, und
^{∗} eine Bindung darstellt; 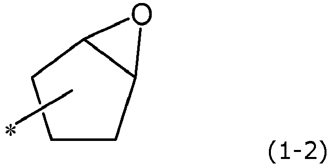 wobei ^{∗} die gleiche Bedeutung wie oben definiert hat; und 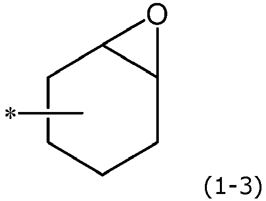 wobei ^{∗} die gleiche Bedeutung wie oben definiert hat.

3. Festphasenträger nach Anspruch 1, wobei die Anzahl der Kohlenstoffatome der durch R³ dargestellten Gruppe 1 bis 8 beträgt.

4. Verfahren zur Herstellung eines Füllstoffs für die Affinitätschromatographie, wobei das Verfahren umfasst,
das Fixieren eines Liganden an den Festphasenträger nach einem der Ansprüche 1 bis 3.

## Revendications

1. Support de phase solide ayant un groupe fonctionnel capable de fixer un ligand, le groupe fonctionnel capable de fixer un ligand étant un groupe éther cyclique, et un groupe représenté par la formule suivante (2-1), (2-2), ou (2-3), la formule (2-1), (2-2), ou (2-3) étant représentée par : 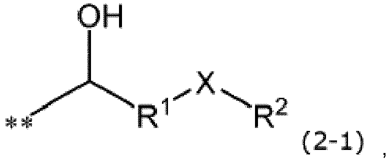
R¹ représentant un groupe alcanediyle ayant 1 à 6 atomes de carbone,
R2
étant représenté par la formule suivante (3) : 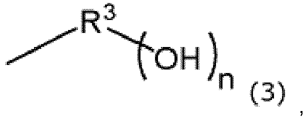
R³ représentant un groupe alcanediyle ou un groupe alcanetriyle ayant 1 à 10 atomes de carbone, et n représentant 1 ou 2,
X représentant un groupe sulfinyle, un groupe sulfure, un groupe oxy ou un groupe imino, et
^{∗∗} représentant une liaison ; 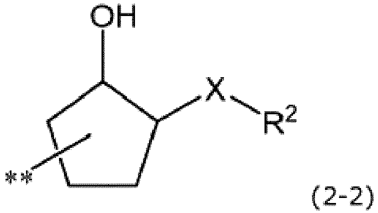
R², X, et ^{∗∗} ayant la même signification que décrit ci-dessus ; et 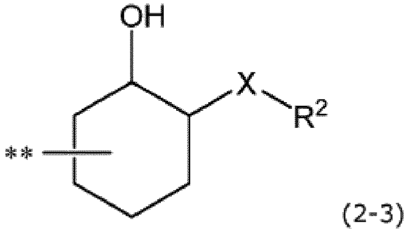
R², X, et ^{∗∗} ayant la même signification que décrit ci-dessus.

2. Support de phase solide selon la revendication 1, le groupe éther cyclique étant un groupe représenté par la formule suivante (1-1), (1-2) ou (1-3) : 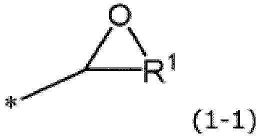 R¹ représentant un groupe hydrocarboné divalent ayant 1 à 6 atomes de carbone, et * représentant une liaison ; 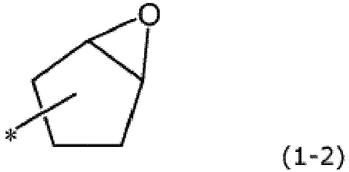 * ayant la même signification que défini ci-dessus ; et 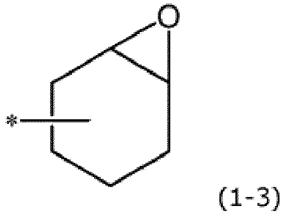 * ayant la même signification que défini ci-dessus.

3. Support de phase solide selon la revendication 1, le nombre d'atomes de carbone du groupe représenté par R³ étant de 1 à 8.

4. Procédé pour la production d'une charge pour une chromatographie d'affinité, le procédé comprenant,
la fixation d'un ligand sur le support de phase solide selon l'une quelconque des revendications 1 à 3.
